# EUROPEAN PATENT SPECIFICATION

(11) **EP 1 515 818 B1**
(45) Date of publication and mention of the grant of the patent: **19.10.2005**
(21) Application number: 03761481.5
(22) Date of filing: 20.06.2003
(51) Int. Cl.: B23B 5/02

(54) **APPARATUS FOR MACHINING A HUB BEARING UNIT FOR A WHEEL OF A MOTOR VEHICLE**
VORRICHTUNG ZUR BEARBEITUNG EINER NABENLAGEREINHEIT FÜR EIN RAD EINES KRAFTFAHRZEUGS
APPAREIL D'USINAGE D'UNE UNITE DE ROULEMENTS DE MOYEU DESTINEE A UNE ROUE D'UN VEHICULE A MOTEUR

(30) Priority: 27.06.2002 IT BO20020409
(43) Date of publication of application: 23.03.2005
(73) Proprietor: MINGANTI INTERNATIONAL LIMITED, Dublin 2 (IE)
(72) Inventor: CALDANA, Marcus, I-40129 Bologna (IT)
(74) Representative: Porsia, Dino
(86) International application number: PCT/EP2003/006554
(87) International publication number: WO 2004/002660

(56) References cited:
- WO-A-00/74883
- WO-A-01/38025

## Description

The invention finds industrial utilisation in the machine tools for the working on industrial scale of the units with bearings and with flange suitable to carry the disk of the brakes for the hubs of the wheels of the motor vehicles, to effect the precision machining the surface of said flange, with the object of reducing the effects of the so-called runout or wobble caused by the small working and assembling tolerances of the bearings and of the other portions of the unit which is referred to. This technology is for example described in the patent applications PCT/US00/14187 (TIMKEN) and PCT/EP00/11684 (SKF). Both these patent applications are focused to effect the machining for the above mentioned purposes, of a unit made by a box suitable to be fixed to the frame or the steering portions of the motor vehicle and in which there is axially assembled in a rotatable manner with the interposition of bearings, a hub which is axially hollow for the possible connection to a rotation shaft and which is provided at one end with a flange which carries perpendicularly projecting screw studs which pass through corresponding holes of the braking disk which is then fixed on this flange with screws, while the said screw studs are then used to fix to the hub, with suitable screw nuts, the rim of the wheel of the motor vehicle. The above mentioned patent applications, provide to keep steady the external box of the unit, to cause the hub to rotate around its axis by charging it axially and finally to machine with the machine tool the surface in view of the flange of the hub on which there will be assembled the disk of the brakes.

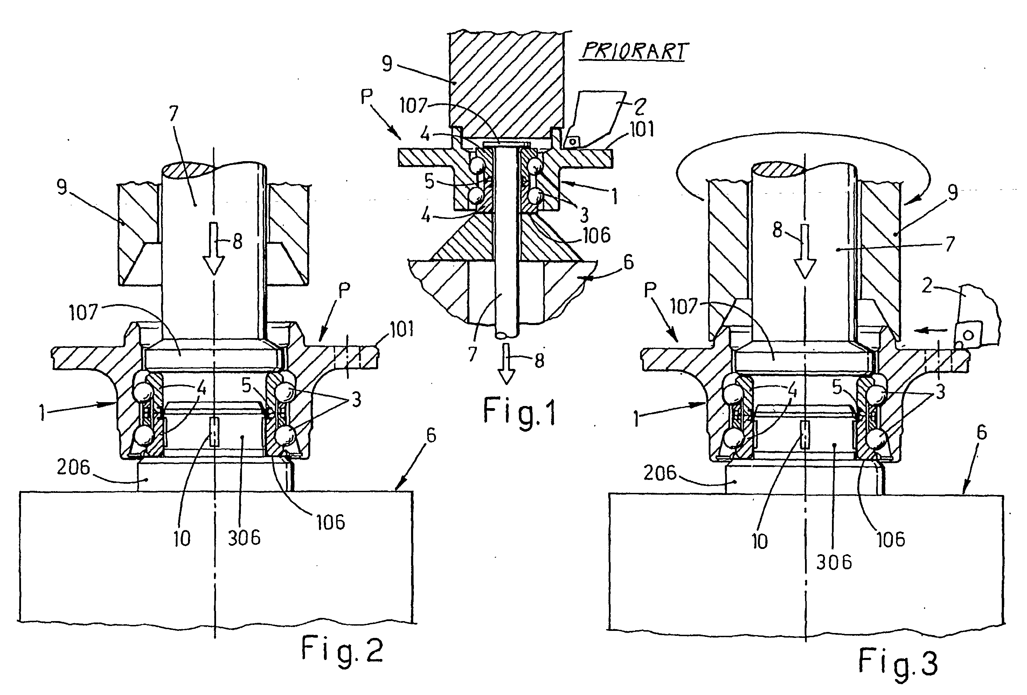

Only in the patent application PCT/EP00/11684 (SKF) there has been provided that said working method may be applied also to unit of boxes with bearings for the hubs of the wheels of the motor vehicles, different from these above mentioned and substantially of the type indicated by reference P schematically shown in the Figure 1 of the attached drawings, which comprise a box 1 which is integrally carrying the flange 101 to be machined on the visible face with the tool 2 and which with its lateral and internal surface forms the external crown for the rolling means 3 of the bearings, which co-operate with internal crowns 4 reciprocally connected with elastic means 5. To effect the machining of workpieces P of this kind, in the SKF patent application it is provided that, as shown in Figure 1, one of the internal crowns 4 of the bearings is resting with its external end on the flat and horizontal surface 106 of the unit 6, on which the whole of the same internal crowns 4 is secured and axially pre-loaded by means of a pin 7 which axially passes through with clearance said crowns 4 and which with its head 107 rests on the external end of the crown 4 opposed to the one resting on the surface 106. The pin 7 is axially pulled in the direction indicated by the arrow 8, in such a manner to pre-load the internal crowns of the bearings substantially with the same entity of pre-load which is given to same during the assembling phase of the workpiece on the hub of the wheel, in such a manner that the same workpiece results to be substantially machined in the same conditions in which it is during the utilization phase. The box is then carried in rotation by the known driver 9, while its flange 101 is machined by the tool 2. The solution shown in Figure 1 has resulted to be not usable in the industrial scale, for the difficulty of positioning of the pin 7 and of the workpiece on the supporting structure and for the difficulty to axially align the same workpiece with good precision with respect to the whole structure for supporting and driving in rotation. The main object of the invention is the realisation of an apparatus which can ensure rapidity, precision and complete automation in the work positioning of the said workpieces P having the flanged box and with internal bearing for the hubs of the motor vehicles. According to the invention, the pin 7 is overturned and is co-axially inserted in the driver 9 with possibility of relative movement with respect to the same driver. The internal crown of the bearing which is resting on the reference flat surface co-operates with a centring pin which may be provided with movable and active members for the same centring.

Further features of the invention, and the advantages deriving therefrom, will appear better evident from the following description of a preferred embodiment of same made, by way of non-limiting example, with reference to the figures of single attached sheet of drawing, in which, in addition to the already considered Figure 1, it is noted that Figures 2 and 3 show with the same outline of Figure 1, with portions in section and with other portions in view, the apparatus which is referred to in two following steps of its working cycle.

From Figure 2 it is noted that the frontal and visible surface on the lower ring 4 of the inner bearings of the workpiece P, rests on the flat and horizontal surface 106 of a vertical mandrel 206 of the station 6 which in the machine tool provides to the right positioning of the said workpiece with respect to the several operating members of the apparatus which is referred to. The mandrel 206 is provided with a cylindrical and coaxial pin 306 which axially engages, completely or partially, at least the lower ring 4 of the bearings of the workpiece or which engages also a portion of the upper crown of the same bearings and this pin may have a diameter which may co-operate with the crown/crowns 4 with sufficient precision, or may co-operate with clearance with said crowns 4, in which case the pin 306 may be provided with lateral devices 10 radially movable with self-centring movement, which may be activated to ensure a precise axial alignment of the workpiece upon the mandrel 206. When the workpiece P is assembled upon the mandrel, the means 10 are initially in the back position and only in a second time they are activated in order to align the same workpiece with precision on the mandrel. The action of the means 10 on the crown 4 of the bearing is soft in order to not cause deformations and to allow to the workpiece the whole required axial displacement freedom for the phases of axial pre-charging (further described) of the bearings. Usefully, the front in view of the pin 306 is tapered in order to favour the automatic placing of the workpiece on the mandrel 206 by means of manipulating grippers of the machine, connected for example to the slide movable on orthogonal axis, which carries the working tool 2. The mandrel 206 may be a fixed apparatus, as provided in the patents mentioned in the introduction, or may an apparatus which upon command may rotate around its axis with the control of speed and phase regulation means.

Always from Figure 2 it is noted that once the workpiece P is placed in the station 6, there intervenes the second slide with orthogonal movements of the machine, upon which there is assembled the driver 9 which according to the invention is axially hollow and carries internally a rod 7 with a lower head 107 having a diameter which is smaller than the one of the axial cavity of the box 1 of the workpiece P. The portions 7 and 9 are reciprocally uncoupled both in the axial movements and in the rotatory movements and are controlled by own means, not shown because easily conceivable and realisable by persons skilled in the art. The rod 7 is, at the beginning, extended from the driver 9 with its head 107, in such a manner to be lowered with this inside the box 1 and to be brought to rest with the same head on the upper crown 4 of the bearings of the workpiece P, to subject the bearings to an axial pre-loading which is proportionate to the one of the utilization conditions of the workpiece. In a following phase the driver 9 is lowered on the box 1 in such a manner to frontally engage it on the internal or on the external diameter, as shown for example in Figure 3. The driver 9 is connected to rotation and stop means, while the rod 7 or at least its head 107 is preferably freely rotatable around its axis.

Once the axial pre-loading of the internal crowns 4 and of the bearings by means of the presser 7, 107 is effected, the driver 9 can rotate the box 1 with the relative flange 101 for the working by the tool 2, while the mandrel 206 remains motionless, or preventively the driver 9 may be held motionless and the mandrel 206 may be rotated together with the internal crowns 4 of the bearings, while the surface to be machined of the flange 101 is controlled by a feeler placed for example on the same slide which carries the unit 9, 7, 107 and which detects the features of the runout, to correctly control the following working phases of the same flange by the tool 2. The working of the flange 101 may be performed with the mandrel 206 stopped in any angular position or prearranged angular position related to the features of the detected runout, or the same mandrel may rotate around its axis with a correct relative motion with respect to the external box 1. Once the working phase of the flange 101 is finished, the above mentioned operation for the measuring of the runout may be performed again for control purpose.

Once the working phase of the flange 101 is finished, the driver 9 is axially moved away form the workpiece P, then is moved away the presser 7, 107, and then the possible centring means 10 of the pin 306 are neutralised and the machined workpiece in moved away by means of the grippers of the working machine (not shown). It is to be understood that if it is imposed by particular conditions, the unit 9, 7, 107 may be pre-arranged with clamping means to act also like a gripper, for example for the discharging from the station 6 of the machined workpiece while in this one there is positioned by other means a following workpiece P to be machined.

## Claims

1. Apparatus for the reduction of the runout in the disk carrying flange (101) of the box (1) with internal bearings (3, 4) for the hub of the wheels of the motor vehicles, of the type comprising means for the axial pre-loading the internal crowns (4) of the bearings in such a manner that the workpiece is machined in the same conditions in which the same will be in the utilization phase, **characterised by** the fact that the axial pre-loading means (7, 107) of the internal crowns of the bearings are connected to the driver (9) for the driving in rotation of the box (1) with the flange (101) to be machined, while the internal crown (4) of the bearings which is opposed to the one directly acted upon by said pre-loading means, frontally rests on a surface (106) which is perpendicular to the same pre-loading means and means are provided to ensure a correct axial alignment of the workpiece with respect to said axial pre-loading means, with respect to said rest surface (106) and with respect of said driving means (9).

2. Apparatus according to claim 1), in which the pre-loading means (7, 107) are co-axially arranged inside of the driver (9) which in correct phase engages one end of the box (1) of the workpiece to be machined, to avoid the same to rotate or to drive in rotation around its axis.

3. Apparatus according to claim 1, in which means are provided to allow that the pre-loading means (7, 107) are relatively movable and independent with respect to the driver (9), both in the axial direction, and in rotation around the common axis, the said pre-loading means or at least their head (107) in contact with the workpiece to be machined, freely rotatable around their axis.

4. Apparatus according to claim 1) in which the centring means comprise a pin (306) arranged perpendicularly on the resting surface (106) of one of the internal crowns (4) of the bearings of the workpiece to be machined and such pin internally engages said crown (4) of the bearings in order to realize the required centring of the same workpieces with regard to the various operative components of the apparatus.

5. Apparatus according to claim 4) in which said pin (306) is provided with a head flaring which facilitates the coupling with the internal crown of the bearings.

6. Apparatus according to claim 4), in which said pin (306) is such to engage with precision the internal crown (4) of the bearings.

7. Apparatus according to claim 4), in which said pin (306) is such to engage with clearance the internal crown (4) of the bearings and is laterally provided with means (10) with radial and self-centring expansion and retraction movement, which usually are in the retracted rest position and that once the pin is inserted in the workpiece, are carried in expansion to contact the internal crown (4) of the bearings and to centre in correct manner the same workpiece, while leaving it free in the axial movement with respect to the pre-loading means (7, 107).

8. Apparatus according to claim 4, in which the flat surface (106) for the resting of the workpiece, with the relative pin (306) for the centring of the same workpiece, are connected to a mandrel (206) which may be fixed or upon command may rotate around its axis under control of speed and phase control means.

9. Apparatus according to claim 1, in which means are provided in order to allow that the unit formed by the driver (9) and by the pre-loading pusher (7, 107) can, if required, act also as gripper for the manipulation of the workpiece for example for the discharge of the machined workpiece from the positioning station (6).

10. Apparatus according to claim 9, in which the positioning station (6) for the workpiece to be machined is arranged with its axis vertically and is oriented upwardly and all the operative members of the same apparatus are arranged with the axis vertically oriented, the unit formed by the driver (9) and by the pre-loading pusher (7, 107), assembled on a movable slide on orthogonal axis, which may carry other operative members, such for example the feelers for the runout of the workpiece, while the tool (2) is mounted on another slide movable on orthogonal axis, which can carry aboard the loading and unloading grippers of the workpieces to be machined and already machined.

## Patentansprüche

1. Vorrichtung zur Reduzierung der Unrundheit in dem eine Scheibe tragenden Flansch (101) der Radbüchse (1) mit inneren Lagern (3, 4) für die Radnabe von Kraftfahrzeugen, solcher Art, die Mittel für die axiale Vorspannung der inneren Lagerkränze in solch einer Art und Weise aufweist, daß das Werkstück unter den gleichen Bedingungen bearbeitet wird, in welchen es sich in in der Nutzungsphase befindet, **dadurch gekennzeichnet, daß** die axialen Vorspannmittel (7, 107) der inneren Lagerkränze mit dem Mitnehmer (9) verbunden sind, der die Radbüchse (1) mit dem zu bearbeitenden Flansch (101) in Rotation versetzt, während der innere Lagerkranz (4), der demjenigen entgegengesetzt liegt, auf den die Vorspannmittel direkt einwirken, frontal an einer Fläche (106) aufliegt, die senkrecht zu den Vorspannmitteln ist, und Mittel zur Gewährleistung einer korrekten axialen Ausrichtung des Werkstücks hinsichtlich der axialen Vorspannmittel, der Auflagerfläche (106) und der Mitnehmermittel (9) vorgesehen sind.

2. Vorrichtung nach Anspruch 1, bei welcher die Vorspannmittel (7, 107) koaxial innerhalb des Mitnehmers (9) angeordnet sind, der in der korrekten Winkellage an einer Stirnseite der Radbüchse (1) des zu bearbeitenden Werkstücks angreift, um zu vermeiden, daß dieses sich dreht oder ein Drehantrieb um seine Achse erfolgt.

3. Vorrichtung nach Anspruch 1, bei welcher Mittel vorgesehen sind, die es erlauben, daß die Vorspannmittel (7, 107) relativ zu dem Mitnehmer (9) sowohl in axialer Richtung als auch in Drehrichtung um die gemeinsame Achse beweglich und unabhängig sind, wobei die Vorspannmittel oder zumindest deren mit dem zu bearbeitenden Werkstück in Kontakt befindliches Stirnende (107) um ihre bzw. seine Achse frei drehbar sind bzw. ist.

4. Vorrichtung nach Anspruch 1, bei welcher die Zentriermittel einen Bolzen (306) aufweisen, der senkrecht an der Auflagerfläche (106) für einen der beiden inneren Lagerkränze (4) des zu bearbeitenden Werkstücks angeordnet ist, und der Bolzen innenseitig in den Lagerkranz (4) eingreift, um die erforderliche Zentrierung des Werkstücks in bezug zu den verschiedenen Bauelementen der Vorrichtung auszuführen.

5. Vorrichtung nach Anspruch 4, bei welcher der Bolzen (306) mit einem sich verjüngenden Ende versehen ist, welches das Zusammenfügen mit dem inneren Lagerkranz (4) erleichtert.

6. Vorrichtung nach Anspruch 4, bei welcher der Bolzen (306) so ausgebildet ist, daß er paßgenau in den inneren Lagerkranz (4) eingreift.

7. Vorrichtung nach Anspruch 4, bei welcher der Bolzen (306) so ausgebildet ist, daß er mit Spiel in den inneren Lagerkranz (4) eingreift, und seitlich mit Mitteln (10) mit radialer und selbstzentrierender Aufweitungs- und Rückzugsbewegung versehen ist, die sich gewöhnlich in der eingezogenen Ruhestellung befinden und in Aufweitung gehalten sind, sobald der Bolzen in das Werkstück eingeführt ist, um den inneren Lagerkranz (4) zu berühren und das Werkstück in korrekter Art und Weise zu zentrieren, während es in bezug auf die Vorspannmittel (7, 107) axial beweglich bleibt.

8. Vorrichtung nach Anspruch 4, bei welcher die glatte Fläche (106) zum Auflegen des Werkstücks und der Bezugsbolzen (306) für das Zentrieren des Werkstücks mit einem Dorn (206) verbunden sind, der feststehend oder unter der Kontrolle von Steuerungsmitteln für Geschwindigkeit und Winkellage um seine Achse drehbar ist.

9. Vorrichtung nach Anspruch 1, bei welcher Mittel vorgesehen sind, die es ermöglichen, daß die von dem Mitnehmer (9) und dem Vorspannschieber (7, 107) gebildete Baugruppe, wenn erforderlich, auch als Greifer für die Handhabung des Werkstücks verwendbar ist, zum Beispiel für die Entnahme des bearbeiteten Werkstücks von der Positionierungsstation (6).

10. Vorrichtung nach Anspruch 9, bei welcher die Positionierungsstation (6) für das zu bearbeitende Werkstück mit ihrer Achse vertikal angeordnet und nach oben gerichtet ist und alle Bauelemente der Vorrichtung mit vertikaler Achse ausgerichtet sind, wobei die Einheit aus dem Mitnehmer (9) und dem Vorspannschieber (7, 107) auf einem bewegbaren Schlitten auf einer orthogonalen Achse montiert ist, der andere Bauelemente tragen kann, wie zum Beispiel die Fühler für die Unrundheit des Werkstücks, während das Werkzeug (2) auf einem anderen Schlitten befestigt ist, der auf einer orthogonalen Achse bewegbar ist und die Be- und Entladegreifer der zu bearbeitenden und der bereits bearbeiteten Werkstücke tragen kann.

## Revendications

1. Appareil permettant la réduction de l'ovalisation de la bride porte-disque (101) du boîtier (1) muni de roulements internes (3, 4) pour le moyeu de roues de véhicules à moteur, du type comprenant des moyens de précharge axiale des couronnes internes (4) des roulements de telle sorte que l'ébauche soit usinée dans les mêmes conditions que dans la phase d'utilisation, **caractérisé par le fait que** les moyens de précharge axiale (7, 107) des couronnes internes des roulements sont reliés à l'organe (9) d'entraînement en rotation du boîtier (1) avec la bride (101) à usiner, alors que la couronne interne (4) des roulements qui est opposée à celle directement chargée par lesdits moyens de précharge, s'appuie par sa face avant sur une surface (106) qui est perpendiculaire aux mêmes moyens de précharge, et des moyens sont prévus pour garantir un alignement axial correct de l'ébauche par rapport au dit moyen de précharge axiale, par rapport à ladite surface d'appui (106) et par rapport au dit moyen d'entraînement (9).

2. Appareil selon la revendication 1), dans lequel les moyens de précharge (7, 107) sont disposés de façon coaxiale à l'intérieur de l'organe d'entraînement (9) qui, dans une phase correcte, se met en prise avec une extrémité du boîtier (1) de l'ébauche à usiner pour lui éviter de tourner ou d'être entraînée en rotation autour de son axe.

3. Appareil selon la revendication 1, dans lequel des moyens sont prévus pour faire en sorte que les moyens de précharge axiale (7, 107) soient relativement mobiles et indépendants par rapport à l'organe d'entraînement (9), tant dans le sens axial qu'en rotation autour de l'axe commun, lesdits moyens de précharge, ou au moins leur tête (107) en contact avec l'ébauche à usiner, étant librement mobile(s) en rotation autour leur axe.

4. Appareil selon la revendication 1) dans lequel les moyens de centrage comprennent une broche (306) disposée perpendiculairement à la surface d'appui (106) de l'une des couronnes internes (4) des roulements de l'ébauche à usiner et dans lequel une telle broche se met en prise de façon interne avec ladite couronne (4) des roulements pour réaliser le centrage requis des même ébauches par rapport aux divers composants fonctionnels de l'appareil.

5. Appareil selon la revendication 4) dans lequel ladite broche (306) est pourvue d'une tête évasée qui facilite le couplage avec la couronne interne des roulements.

6. Appareil selon la revendication 4), dans lequel ladite broche (306) est conçue de façon à se mettre en prise de façon précise avec la couronne interne (4) des roulements.

7. Appareil selon la revendication 4), dans lequel ladite broche (306) est conçue de façon à se mettre en prise avec du jeu avec la couronne interne (4) des roulements et est pourvue à sa surface latérale de moyens (10) capables d'un mouvement radial et d'un mouvement d'auto-centrage par extension et retrait, moyens qui sont habituellement en position de repos rentrée et qui, une fois la broche insérée dans l'ébauche, sont amenés à sortir pour être au contact de la couronne interne (4) des roulements et pour centrer de façon approprié la même ébauche, sans empêcher son libre mouvement axial par rapport aux moyens de précharge (7, 107).

8. Appareil selon la revendication 4, dans lequel la surface plane (106) d'appui de l'ébauche et la broche correspondante (306) pour le centrage de la même ébauche, sont reliées à un mandrin (206) qui peut être fixé ou, sur commande, peut tourner autour de son axe sous le contrôle d'un moyen de commande de vitesse et de phase.

9. Appareil selon la revendication 1, dans lequel des moyens sont prévus pour faire en sorte que l'ensemble formé par l'organe d'entraînement (9) et par le poussoir de précharge (7, 107) puisse, au besoin, jouer également le rôle d'un dispositif de préhension de l'ébauche, par exemple pour l'évacuation de l'ébauche usinée du poste de positionnement (6).

10. Appareil selon la revendication 9, dans lequel le poste de positionnement (6) de l'ébauche à usiner est disposé avec son axe orienté dans le sens vertical et est orienté vers le haut, et dans lequel tous les organes fonctionnels du même appareil sont disposés avec leur axe orienté dans le sens vertical, l'ensemble formé par l'organe d'entraînement (9) et par le poussoir de précharge (7, 107) étant assemblé sur un coulisseau mobile sur un axe orthogonal, lequel peut porter d'autres éléments fonctionnels, comme par exemple les palpeurs d'ovalisation de l'ébauche, tandis que l'outil (2) est monté sur un autre coulisseau mobile sur un axe orthogonal, lequel peut porter les dispositifs de préhension pour le chargement et le déchargement des ébauches à usiner et déjà usinées.
